# EUROPÄISCHE PATENTSCHRIFT

(11) **EP 1 076 847 B1**
(45) Veröffentlichungstag und Bekanntmachung des Hinweises auf die Patenterteilung: **23.03.2005**
(21) Anmeldenummer: 99950368.3
(22) Anmeldetag: 06.05.1999
(51) Int. Cl.: G06F 3/05, H03M 1/12

(54) **VERFAHREN ZUM A/D-WANDELN ANALOGER SIGNALE SOWIE ENTSPRECHENDE A/D-WANDLERANORDNUNG**
METHOD FOR ANALOG-DIGITAL CONVERSION OF ANALOG SIGNALS AND CORRESPONDING ANALOG-DIGITAL CONVERTER ARRAY
PROCEDE DE CONVERSION ANALOGIQUE-NUMERIQUE DE SIGNAUX ANALOGIQUES ET DISPOSITIF DE CONVERSION ANALOGIQUE-NUMERIQUE CORRESPONDANT

(30) Priorität: 08.05.1998 DE 19820737
(43) Veröffentlichungstag der Anmeldung: 21.02.2001
(73) Patentinhaber: Infineon Technologies AG, 81669 München (DE)
(72) Erfinder: BARRENSCHEEN, Jens, D-81669 München (DE); FENZL, Gunther, D-85635 Höhenkirchen-Siegertsbrunn (DE)
(74) Vertreter: Jannig, Peter, Dipl.-Ing.
(86) Internationale Anmeldenummer: PCT/DE1999/001068
(87) Internationale Veröffentlichungsnummer: WO 1999/059055

(56) Entgegenhaltungen:
- DE-A- 4 305 046
- DE-A- 19 650 341
- US-A- 5 302 952
- US-A- 5 619 201
- US-A- 5 675 337

## Beschreibung

Die vorliegende Erfindung betrifft ein Verfahren zum A/D-Wandeln analoger Signale mit Hilfe eines A/D-Wandlers sowie eine entsprechende A/D-Wandleranordnung.

In komplexen Applikationen müssen unterschiedliche analoge Eingangssignale als Antwort auf verschiedene Ereignisse einem A/D-Wandler zugeführt und gewandelt werden. Die zu wandelnden Eingangssignale können von unterschiedlichen Anforderungsquellen beliebig angefordert werden. Die Anforderungsquellen erzeugen dabei Anforderungssignale für das Wandlungsauswahlverfahren, um auf diese Weise die A/D-Wandlung eines bestimmten Signalkanals bei dem A/D-Wandler anzufordern.

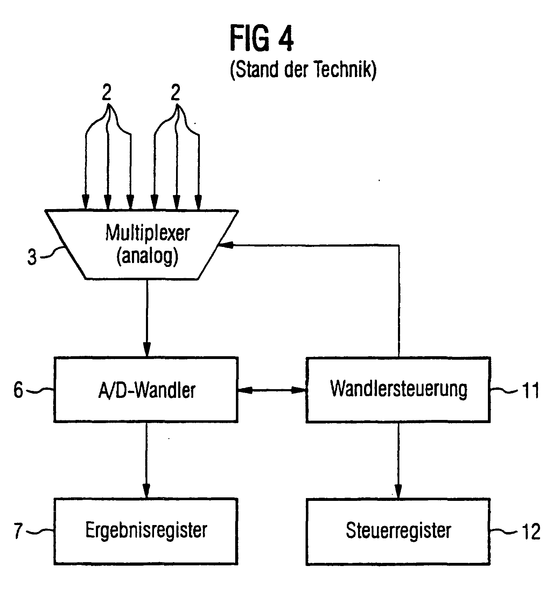

Fig. 4 zeigt ein vereinfachtes Blockschaltbild einer bekannten A/D-Wandleranordnung, wie sie beispielsweise von der Anmelderin unter der Typenbezeichnung C167 vertrieben wird. Wie Fig. 4 entnommen werden kann, wird ein A/D-Wandler 6 über einen analogen Multiplexer 3 angesteuert. Der Multiplexer 3 dient zur Auswahl einer Vielzahl von analogen Signalen, die jeweils unterschiedlichen Signalkanälen 2 zugeordnet sind. Der A/D-Wandler 6, der beispielsweise durch einen 10-Bit-Wandler realisiert sein kann, wird durch eine Steuereinheit 11 angesteuert, die ihrerseits auf ein vorzugsweise zentrales Steuerregister 12 zugreift. Das Steuerregister 12 umfaßt mehrere Bitfelder, die für die Steuerung der A/D-Wandleranordung maßgeblich sind. So kann das Steuerregister 12 beispielsweise ein Bitfeld umfassen, welches den jeweils zu verarbeitenden Signalkanal 2 definiert. Abhängig von dem Inhalt dieses Bitfelds steuert die Steuereinheit 11 den Multiplexer 3 derart an, daß ein bestimmter Signalkanal 2 ausgewählt und das entsprechende analoge Signal dem A/D-Wandler 6 zugeführt wird. Nach der Wandlung eines Abtastwerts dieses zugeführten Signals wird das Ergebnis der A/D-Wandlung in einem Ergebnisregister 7 abgelegt. Danach kann erneut das analoge Signal des durch den Inhalt des Steuerregisters 12 definierten Signalkanals 2 abgetastet und gewandelt werden.

Durch das Steuerregister 12 kann des weiteren der Betriebsmodus der A/D-Wandleranordnung festgelegt sein. So kann beispielsweise durch den Inhalt des Steuerregisters 12 definiert werden, daß abgesehen von der zuvor erwähnten Einzelkanalwandlung eine Autoscanwandlung durchgeführt wird, bei der ausgehend von dem in dem Steuerregister 12 festgelegten Signalkanal 2 alle Kanäle nacheinander einmal gewandelt werden. Anschließend wird in diesem Betriebsmodus wieder von vorne mit dem in dem Steuerregister 12 festgelegten Signalkanal 2 begonnen.

Bei der in Fig. 4 gezeigten A/D-Wandleranordnung kann der Fall auftreten, daß ein bestimmtes analoges Signal aus bestimmten Gründen bevorzugt zu behandeln ist. In diesem Fall kann der Programmierer, beispielsweise durch einen Software-Eingriff, ein entsprechendes Steuerbit in dem Register 12 setzen, wodurch festgelegt wird, daß der durch das Steuerregister 12 festgelegte, übliche Betriebsablauf unterbrochen und der bevorzugt zu behandelnde Signalkanal 2, welcher in einem weiteren Register definiert sein kann, vorübergehend zwischengeschoben wird, um das entsprechende analoge Signal zu wandeln. Anschließend wird wieder mit dem in dem Steuerregister 12 definierten normalen Betriebsmodus fortgefahren.

Aus der obigen Beschreibung zu Fig. 4 folgt, daß bei der in Fig. 4 gezeigten bekannten A/D-Wandleranordnung keine automatische Unterscheidung der Wichtigkeit bzw. keine automatische bevorzugte Behandlung der dem Multiplexer 3 zugeführten unterschiedlichen Signalkanäle 2 möglich ist. Vielmehr ist für eine bevorzugte Behandlung eines bestimmten Übertragungskanals ein aufwendiger, durch einen Programmierer extern initiierter Software-Eingriff erforderlich.

Aufgrund der ständig zunehmenden Anzahl der Eingangskanäle von A/D-Wandleranordnungen sowie der Tatsache, daß es sich bei der A/D-Wandlung in der Regel um sehr zeitkritische Anwendungen handelt, ist eine genaue Einhaltung der Abfolge der zu wandelnden Signale zwingend notwendig. Dies trifft insbesondere dann zu, wenn die dem Multiplexer 3 zugeführten analogen Signale nicht nur von einer einzelnen Anforderungsquelle, wie z. B. einem Zeitgeber oder einer Softwareanwendung, sondern von einer Vielzahl unterschiedlichen Anforderungsquellen stammen. Insbesondere dann besteht die Notwendigkeit, daß bei gleichzeitig der A/D-Wandleranordnung zugeführten Anforderungen für eine A/D-Wandlung diese nach vorgegebenen Entscheidungskriterien (Reihenfolge) bzw. insbesondere abhängig von deren Wichtigkeit verarbeitet werden.

Der vorliegenden Erfindung liegt daher die Aufgabe zugrunde, ein Verfahren zur Auswahl analoger Signale, die von unterschiedlichen A/D-Anforderungsquellen angefordert werden, sowie eine A/D-Wandleranordnung anzugeben, die eine definierbare Abarbeitungsreihenfolge enthalten und die eine A/D-Wandlung von gleichzeitig anliegenden Anforderungen für eine A/D-Wandlung ermöglichen. Insbesondere soll eine bevorzugte Verarbeitung von wichtigen A/D-Wandleranforderungen ermöglicht werden.

Erfindungsgemäß wird diese Aufgabe durch ein Verfahren zum A/D-Wandeln analoger Signale mit den Merkmalen des Anspruchs 1 und durch eine A/D-Wandleranordnung mit den Merkmalen des Anspruches 9 gelöst.

Die Unteransprüche beschreiben jeweils bevorzugte und vorteilhafte Ausführungsformen der vorliegenden Erfindung, die ihrerseits zu einer möglichst einfachen Verwaltung von gleichzeitigen A/D-Wandleranforderungen bzw. zu einer möglichst einfachen technischen Realisierung des entsprechenden Verfahrens beitragen.

Gemäß der vorliegenden Erfindung ist ein A/D-Wandler zur Verarbeitung bzw. Wandlung analoger Signale vorgesehen, die jeweils von unterschiedlichen A/D-Wandler-Anforderungsmitteln bzw. A/D-Wandleranforderungsquellen angefordert werden. Jede A/D-Wandler-Anforderungsquelle erzeugt als Antwort auf definierbare Ergebnisse eine Anforderung für einen oder mehrere beliebige Signalkanäle, um eine A/D-Wandlung des entsprechenden Signals durch den A/D-Wandler herbeizuführen. Dabei kann der Fall auftreten, daß gleichzeitig Anforderungen von unterschiedlichen A/D-Wandler-Anforderungsquellen vorliegen. Um dieses Problem bewältigen zu können, ist gemäß der vorliegenden Erfindung jeder Anforderungsquelle eine einstellbare Priorität zugeordnet. Sobald Anforderungen von Anforderungsquellen für eine A/D-Wandlung vorliegen, wird diejenige eine A/D-Wandlung anfordernde Anforderungsquelle ausgewählt, der zu diesem Zeitpunkt die höchste Priorität zugeordnet ist, und das angeforderte analoge Signal der ausgewählten Anforderungsquelle dem A/D-Wandler zugeführt.

Mit Hilfe des gemäß der vorliegenden Erfindung vorgeschlagenen Priorisierungs- bzw. Arbitrierungsverfahrens (i.e. Auswahlverfährens) können komplexe Prioritätsstrukturen erstellt und ohne zusätzlichen Software- oder CPU-Aufwand verwaltet werden. Insbesondere ist es möglich, eine Vielzahl von Anforderungen unterschiedlicher Anforderungsquellen applikationsgerecht und damit prioritätsgerecht zu verarbeiten. Vorteilhafterweise können die Prioritäten den unterschiedlichen Anforderungsquellen beliebig zugeordnet und frei programmiert werden, so daß die gemäß der vorliegenden Erfindung vorgeschlagene A/D-Wandleranordnung einfach den jeweiligen Bedürfnissen angepaßt werden kann. Die Entscheidung, in welcher Reihenfolge die einzelnen Signalkanäle gewandelt werden sollen, wird automatisch durch die Hardware der A/D-Wandleranordung ohne Software-Eingriff getroffen.

Da in der Regel jede A/D-Wandler-Anforderungsquelle eine Mehrzahl von Kanälen mit entsprechenden analogen Signalen anfordern kann, kann vorteilhafterweise nach der Auswahl der zu verarbeitenden A/D-Wandler-Anforderungsquelle (Quellenpriorisierung) zudem eine Auswahl des tatsächlich zu verarbeitenden Signalkanals der zuvor ausgewählten A/D-Wandler-Anforderungsquelle vorgesehen sein (Kanalpriorisierung), um auf diese Weise bei Vorhandensein von Anforderungsimpulsen für mehrere Kanäle der bereits zuvor ausgewählten A/D-Wandler-Anforderungsquelle einen bestimmten Kanal für die A/D-Wandlung zu bestimmen. Die Auswahl des zu verarbeitenden Kanals kann ebenfalls anhand einer definierbaren Prioritätsregel erfolgen.

Die vorliegende Erfindung wird nachfolgend anhand eines bevorzugten Ausführungsbeispiels unter Bezugnahme auf die Zeichnungen erläutert.
Fig. 1 zeigt ein vereinfachtes Blockschaltbild einer A/D-Wandleranordnung gemäß der vorliegenden Erfindung,
Fig. 2 zeigt den detaillierten Aufbau eines exemplarischen Steuerregisters einer in Fig. 1 dargestellten Priorisierungslogik,
Fig. 3 zeigt ein Beispiel für einen zeitlichen Ablauf der von der in Fig. 1 dargestellten A/D-Wandleranordnung durchgeführten Quellen- und Kanalpriorisierung, und
Fig. 4 zeigt ein vereinfachtes Blockschaltbild einer bekannten A/D-Wandleranordnung.

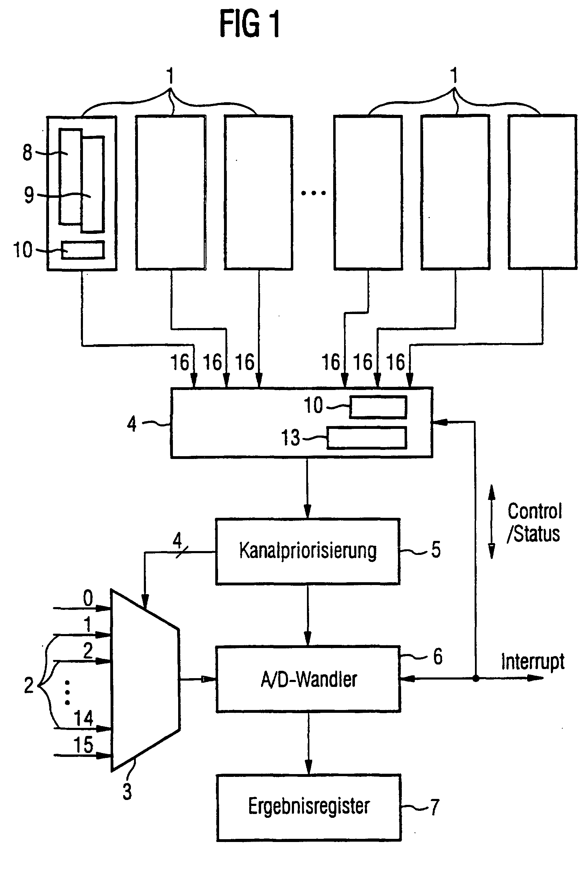

Die in Fig. 1 gezeigte A/D-Wandleranordnung gemäß der vorliegenden Erfindung umfaßt als zentralen Bestandteil einen A/D-Wandler 6, dessen Aufgabe es ist, ein ihm zugeführtes analoges Signal abzutasten und zu wandeln. Der gewandelte Abtastwert des jeweiligen analogen Signals wird in einem Ergebnisregister 7 gespeichert, welches mit dem A/D-Wandler gekoppelt ist.

Die von dem A/D-Wandler 6 zu verarbeitenden analogen Signale können von einer Mehrzahl von Kanälen ausgewählt werden, die von verschiedenen A/D-Wandler-Anforderungsquellen angefordert werden können.

Die A/D-Wandleranordnung in Figur 1 umfaßt mehrere A/D-Wandler-Anforderungsquellen 1, die jeweils über Anforderungssignale 16 eine beliebige Anzahl von Signalkanälen 2 anfordern können. Ferner weist die A/D-Wandleranordnung Auswahleinheiten 4, 5 auf, die den A/D-Wandler-Anforderungsquellen 1 nachgeschaltet sind und die einen der analogen Signalkanäle 2, der durch die Anforderungsquellen 1 angefordert wird, auswählt und mit Hilfe einer nachgeschalteten Multiplexerschaltung 3 dem A/D-Wandler 6 zur Wandlung zuführt. Beim Eintreten eines der Anforderungsquelle 1 spezifischen Ereignisses erzeugt jede der Anforderungsquellen 1 ein Anforderungssignal an die Auswahleinheiten 4, 5. Nach einem vorgegebenen Prioritätsschema wird diejenige Anforderung mit der höchsten Priorität ausgewählt und der von dieser Anforderungsquelle angeforderte Signalkanal 2 nach der Kanalpriorisierung 5 dem A/D-Wandler 6 zugeführt.

Bei den einzelnen Anforderungsquellen 1 kann es sich um unterschiedliche Arten von Anforderungsquellen handeln, so daß gegebenenfalls eine unterschiedliche Verarbeitungsreihenfolge der A/D-Wandleranforderungen der einzelnen Anforderungsquellen 1 gewünscht sein kann. So kann es sich beispielsweise bei einer Anforderungsquelle um eine programmierbare Zeitgebereinheit (Timer) handeln, die zeitlich gesteuert Anforderungssignale für den A/D-Wandler erzeugt und insbesondere abhängig von einem Zeitgebertakt periodisch A/D-Wandlungen für die ausgewählten Signalkanäle anfordert. Des weiteren kann die Anforderungsquelle 1 durch eine Hardware-Einrichtung realisiert sein, welche programmgesteuerte Anforderungssignale für eine A/D-Wandlung erzeugt. Ebenso kann eine Anforderungsquelle 1 durch eine Warteschlange (FIFO) realisiert sein, so daß für die einzelnen Kanäle dieser Anforderungsquelle nacheinander entsprechend ihrer Position in der Warteschlange Anforderungssignale für eine A/D-Wandlung erzeugt werden. In diesem Fall werden somit die durch die entsprechenden Anforderungsquelle angeforderten Signalkanäle stapelartig nacheinander abgearbeitet. Ebenso kann eine Anforderungsquelle 1 in Übereinstimmung mit dem anhand Fig. 4 erläuterten Stand der Technik einen Wandlungseinfügemodus aufweisen, um ein bevorzugt zu verarbeitendes Anforderungssignal zu erzeugen. Des weiteren ist es möglich, daß es sich bei der Anforderungsquelle 1 um eine Synchronisierungseinrichtung handelt, die synchron zu einem weiteren A/D-Wandler oder zu einem externen Zeitgeber ein Anforderungssignal für eine A/D-Wandlung für einen definierbaren Signalkanal erzeugt. Zudem kann einem Anforderungsquelle 1 gemäß einem sogenannten Autoscan-Modus betrieben werden, wobei nacheinander für die entsprechenden Signalkanäle Anforderungssignale für eine A/D-Wandlung erzeugt werden. Schließlich kann die Anforderungsquelle 1 auch derart realisiert sein, daß sie abhängig von einem bestimmten (externen) Ereignis, d. h. ereignisgetriggert, ein Anforderungssignal für einen oder mehrere entsprechende Signalkanäle erzeugt. Selbstverständlich sind auch andere Arten von Anforderungsquellen möglich.

Gemäß der vorliegenden Erfindung sind bei der in Fig. 1 gezeigten A/D-Wandleranordnung Auswahleinheiten 4, 5 implementiert, die es ermöglichen, gegebenenfalls gleichzeitig auftretende A/D-Wandleranfragen von mehreren Anforderungsquellen zu verarbeiten. Gemäß dem in Fig. 1 dargestellten Ausführungsbeispiel umfaßen diese Auswahleinheiten 4,5 einerseits eine Priorisierungslogik 4 für die unterschiedlichen Anforderungsquellen 1 und andererseits eine Priorisierungslogik 5 für die angeforderten Signalkanäle 2.

Die Priorisierungslogik 4 dient zur Auswahl einer bestimmten Anforderungsquelle 1, die typischerweise die am höchsten priorisierte Anforderungsquelle 1 darstellt, falls gleichzeitig Anforderungen für den A/D-Wandler 6 von unterschiedlichen Anforderungsquellen 1 vorliegen. Zu diesem Zweck umfaßt die Priorisierungslogik 4 ein Steuerregister 13, in dem für jede einzelne Anforderungsquelle 1 eine Priorität programmierbar ist. Das Steuerregister 13 ist dabei frei programmierbar, so daß die Prioritäten durch den Benutzer beliebig vergeben werden können. Bei gleichzeitigem Vorhandensein von Anforderungssignalen mehrerer Anforderungsquellen 1 ermittelt die Priorisierungslogik 4 anhand des Registerinhalts des Steuerregisters 13 diejenige Anforderungsquelle 1, der gerade die höchste Priorität zugeordnet ist und die zugleich gerade den A/D-Wandler 6 für einen derer Signalkanäle 2 anfordert.

Dabei kann der Fall auftreten, daß bezüglich der von der Priorisierungslogik 4 ausgewählten Anforderungsquelle 1 Anforderungen für mehrere Signalkanäle 2 vorliegen. Für diesen Fall ist die Kanalpriorisierungslogik 5 vorgesehen, die gemäß einem vorher definierten Algorithmus den von dem A/D-Wandler 6 tatsächlich zu verarbeitenden Signalkanal 2 der von der Anforderungsquellen-Priorisierungslogik 4 ausgewählten Anforderungsquelle 1 ermittelt und mit Hilfe der Multiplexerschaltung 3 dem A/D-Wandler 6 zuführt.

Nachdem zuvor allgemein die Funktionsweise der in Fig. 1 dargestellten A/D-Wandleranordnung erläutert worden ist, soll nachfolgend detailliert die Funktionsweise der Priorisierungseinrichtungen 4 und 5 näher erläutert werden.

Nachfolgend wird der Einfachheit halber davon ausgegangen, daß jede der Anforderungsquellen 1 einen im wesentlichen vergleichbaren Hardwareaufbau aufweist. So kann gemäß dem in Fig. 1 dargestellten Ausführungsbeispiel jede Anforderungsquelle 1 insbesondere drei Register 8 - 10, deren Inhalte für die Priorisierung der Anforderungsquellen durch die Logik 4 bzw. für die Kanalpriorisierung durch die Logik 5 maßgeblich sind, umfassen.

Das erste Register 8 entspricht einem Triggersteuerregister 8 und umfaßt mindestens die Anzahl an Steuerbits, die der durch die jeweilige Anforderungsquelle 1 maximal anforderbaren Anzahl an Signalkanälen 2 entspricht. Das Triggersteuerregister 8 wird verwendet, um festzulegen, für welche analogen Signalkanäle 2 augenblicklich eine A/D-Wandleranforderung durch die Anforderungsquelle gestellt werden soll. Durch Setzen eines Steuerbits in dem Triggersteuerregister 8 kann somit die Triggerung bzw. die Erzeugung eines Anforderungssignals für den dem gesetzten Steuerbit entsprechenden analogen Signalkanal ermöglicht werden.

Das zweite Steuerregister 9 dient als Wandleranforderungsregister 9 und umfaßt die gleiche Anzahl an Steuerbits wie das Register 8. Das Wandleranforderungsregister 9 speichert alle noch nicht abgearbeiteten Wandlungsanforderungen für die entsprechende Anforderungsquelle 1. Beim Eintreten des Triggerereignisses für die Anforderungsquelle 1 wird der Inhalt des Wandleranforderungsregisters 9 gemäß des Inhalts der Triggersteuerregister 8 aktualisiert. Die in dem Wandleranforderungsregister 9 enthaltenen Steuerbits werden einer logischen ODER-Verknüpfung unterzogen und das Ergebnis dieser logischen ODER-Verknüpfung jeweils in Form eines gesetzten bzw. nichtgesetzten Steuerflags gespeichert.

Dieses Steuerflag kann in einem Register 10 entweder in der Anforderungsquelle 1 selbst oder in der Priorisierungslogik 4 verwaltet werden. Dies bedeutet, daß das Steuerflag des Registers 10 gesetzt ist, falls für mindestens einen Signalkanal 2 der entsprechenden Anforderungsquelle 1 eine Anforderung für eine A/D-Wandlung vorliegt.

Die Priorisierungslogik 4 überwacht nunmehr den Inhalt der einzelnen Register 10 der unterschiedlichen Anforderungsquellen 1 und führt das zuvor beschriebene Priorisierungs- bzw. Arbitrierungsverfahren für die Anforderungsquellen 1 durch. Im Prinzip ist eine Priorisierung nur dann erforderlich, wenn ein Steuerflag gleichzeitig in zwei unterschiedlichen Steuerregistern 10 von zwei Anforderungsquellen 1 gesetzt ist, wodurch das gleichzeitige Vorhandensein von Anforderungsimpulsen für den A/D-Wandler 6 von zwei unterschiedlichen Anforderungsquellen 1 angezeigt wird. Ist lediglich eine Anforderungsquelle 1 mit einem in dem Register 10 gesetzten Steuerflag vorhanden, wird von der Priorisierungslogik 4 automatisch diese Anforderungsquelle 1 ausgewählt. Für die Zwecke einer Synchronisierung mehrerer Ereignisse kann die Priorisierung auch dauernd erfolgen, wodurch eine Art zentralisierter Takt entsteht.

Hat hingegen die Priorisierungslogik 4 durch Überwachen der Steuerregister 10 erkannt, daß gleichzeitig Anforderungen für den A/D-Wandler 6 von unterschiedlichen Anforderungsquellen 1 vorliegen, wird anhand der in dem Steuerregister 13 der Priorisierungslogik 4 definierten Prioritäten die am höchsten priorisierte Anforderungsquelle 1 ermittelt und ausgewählt.

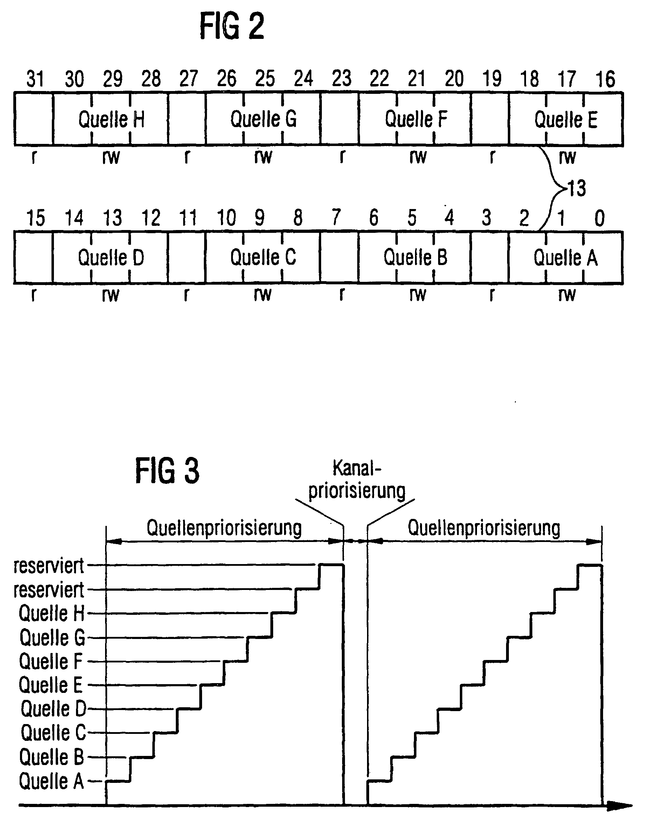

Fig. 2 zeigt einen beispielhaften Inhalt dieses Steuerregisters 13. Bei dem in Fig. 2 gezeigten Beispiel umfaßt das Steuerregister 13 insgesamt 32 Bit, wobei hier zwischen acht unterschiedlichen Anforderungsquellen 1, denen jeweils ein Bitfeld mit vier Bits zugeordnet ist, unterschieden werden kann. Damit lassen sich also pro Anforderungsquelle 1 4-Bit lange Prioritäten realisieren. Davon sind jeweils die ersten drei Bits jeden Bitfelds frei programmierbar und definieren die Priorität der jeweiligen Anforderungsquelle. Demzufolge sind diese Bits in Fig. 2 mit "rw" für "read/write" bezeichnet. Das vierte Bit besitzen hingegen den festen Wert "0" und kann nicht überschrieben werden, so daß dieses Bit mit "r" für "read only" bezeichnet ist. Es wäre jedoch auch jede andere Belegung dieser Prioritätsbits eines Bitfeldes bzw. des Steuerregisters 13 denkbar.

Der Initialisierungswert des in Fig. 2 dargestellten Steuerregisters 13 kann beispielsweise folgendermaßen eingestellt sein:

| Quelle | H | G | F | E | D | C | B | A |
|---|---|---|---|---|---|---|---|---|
| | 0000 | 0001 | 0010 | 0011 | 0100 | 0101 | 0110 | 0111. |

Bei dieser sogenannten inversen Logik wird davon ausgegangen, daß ein niedrigerer binärer Wert eine höhere Priorität bezeichnet, so daß gemäß diesem Initialisierungswert der Anforderungsquelle mit dem Bitfeld der Quelle H die höchste Priorität und der Anforderungsquelle des Bitfeldes der Quelle A die niedrigste Priorität zugewiesen ist. Vorteilhafterweise ist jeder Anforderungsquelle eine unterschiedliche Priorität zugewiesen.

Wie in Fig. 3 gezeigt ist, überprüft die in Fig. 1 dargestellte Priorisierungslogik 4 nacheinander für jedes unterschiedliche Bitfeld des Steuerregisters 13, daß heißt für jede Anforderungsquelle A - H, ob in dem entsprechenden Steuerregister 10 das Steuerflag gesetzt ist, welches das Vorhandensein eines Anforderungsimpulses für den A/D-Wandler 6 andeuten würde. Im vorliegenden Fall wiederholt die Priorisierungslogik 4 zehn aufeinanderfolgende Taktzyklen, zur Anforderungsquellenpriorisierung, die zusammen mit der Kanalpriorisierung die gesamte Periode eines kompletten Arbitrierungszyklus festlegt. Im vorliegenden Beispiel sind die Anforderungsquellen 1 in aufsteigender Abarbeitungsreihenfolge angeordnet, wobei diese Reihenfolge selbstverständlich auch nach anderen Kriterien erfolgen kann.

Wie in Figur 3 dargestellt, wird die dem Bitfeld der Quelle A zugeordnete Anforderungsquelle A überprüft. Anschließend werden die den Bitfeldern entsprechenden Anforderungsquellen B - H überprüft, wobei überprüft wird, ob der entsprechenden Anforderungsquelle eine höhere Priorität als einer zuvor bereits überprüften Anforderungsquelle zugeordnet ist, für welche bereits zuvor ein gesetztes Steuerflag in dem Register 10 festgestellt worden war. Die letzten beiden Taktzyklen der Priorisierungslogik 4 sind bei dem in Fig. 3 dargestellten Ausführungsbeispiel noch nicht einer bestimmten Anforderungsquelle zugeordnet und für spätere Anwendungen reserviert. Nachdem die einzelnen Anforderungsquellen A - H nacheinander überprüft worden sind, ist die Priorisierungslogik 4 darüber informiert, welche der den A/D-Wandler 6 augenblicklich anfordernden Anforderungsquellen 1 die höchste Priorität besitzt, so daß die Priorisierungslogik 4 die entsprechende Anforderungsquelle 1 auswählen kann und die Kanalpriorisierung für diese Anforderungsquellen gestartet werden kann.

Sollten mehreren Anforderungsquellen dieselbe Priorität zugewiesen worden sein und von diesen Anforderungsquellen gleichzeitig Anforderungssignale für den A/D-Wandler 6 vorliegen, wird von der Priorisierungslogik 4 bevorzugt diejenige dieser Anforderungsquellen 1 ausgewählt, die zuerst in der Reihenfolge der Anforderungsquellenpriorisierung überprüft worden ist.

Nach Ablauf der Anforderungsquellenpriorisierung, d. h. bei dem in Fig. 3 dargestellten Beispiel nach Ablauf von zehn Taktperioden der Priorisierungslogik 4, erfolgt die bereits anhand Fig. 1 erläuterte Kanalpriorisierung durch die Priorisierungslogik 5. Diese Kanalpriorisierung wird unmittelbar nach Abschluß der Anforderungsquellenpriorisierung innerhalb der nächsten Taktperiode durchgeführt und dient dazu, den tatsächlich mit Hilfe der Multiplexerschaltung 3 dem A/D-Wandler zuzuführenden Signalkanal 2 der von der Priorisierungslogik 4 ausgewählten Anforderungsquelle 1 zu bestimmen. Es kann dabei der Fall auftreten, daß gleichzeitig für mehrere Signalkanäle 2 ein und derselben Anforderungsquelle 1 Anforderungen für den A/D-Wandler 6 gestellt werden und in dem Wandleranforderungsregister 9 der entsprechenden Anforderungsquelle 1 verzeichnet sind. Aus diesem Grund überwacht die Priorisierungslogik 5 die in dem Wandleranforderungsregister 9 der von der Priorisierungslogik 4 ausgewählten Anforderungsquelle 1 gesetzten Steuerbits und wählt gemäß dem vorliegenden Ausführungsbeispiel denjenigen Signalkanal 2 aus, der dem in dem Wandleranforderungsregister 9 gesetzten höchstwertigen Steuerbit entspricht. Die Kanalpriorisierung kann aber auch nach anderen Kriterien erfolgen. Der ausgewählte Signalkanal 2 wird schließlich mit Hilfe der Multiplexerschaltung 3 dem A/D-Wandler 6 zugeführt und die A/D-Wandlung gestartet, sofern dies zu diesem Zeitpunkt möglich ist. Sollte die A/D-Wandleranordnung 6 noch mit der Wandlung eines vorher ausgewählten Signalkanals 2 beschäftigt sein, kann entweder die laufende Wandlung abgebrochen und später wiederholt werden oder es wird auf das Ende der laufenden Wandlung gewartet, um danach sofort die neue Wandlung zu starten. Da das Arbitrierungsverfahren kontinuierlich abläuft, steht am Ende der laufenden Wandlung immer fest, welche Anforderungsquelle 1 und welcher Signalkanal 2 den letzten beendeten Arbitrierungszyklus "gewonnen" hat und somit die aktuellste Anforderung darstellt.

Nach Starten der A/D-Wandlung bezüglich des von der Priorisierungslogik 4, 5 ausgewählten Signalkanals 2 wird das dem ausgewählten Signalkanal 2 entsprechende Steuerbit in dem Wandleranforderungsregister 9 in dem durch das Priorisierungsmittel 4 ausgewählten Anforderungsmittel 1 gelöscht. Eine weitere Möglichkeit ist das Löschen der dem ausgewählten Signalkanal 2 entsprechenden Steuerbits in den Wandlungsanforderungsregistern 9 aller vorhandener oder der hierfür selektierten Anforderungsquellen 1. Selbstverständlich kann die Kanalpriorisierungslogik 5 den zu wandelnden Signalkanal 2 auch mit Hilfe eines anderen Priorisierungsverfahrens bzw. Priorisierungsalgorithmus bestimmen.

## Patentansprüche

1. Verfahren zum A/D-Wandeln analoger Signale mit Hilfe eines A/D-Wandlers (6) und mit Hilfe einer Vielzahl von Wandler-Anforderungsmitteln (1), denen jeweils eine Priorität zugeordnet ist,
mit den folgenden Verfahrensschritten:
a) Bereitstellen eines Anforderungssignals (16) zur Anforderung einer A/D-Wandlung eines analogen Signals von mindestens einem Wandler-Anforderungsmittel (1),
b) bei Vorliegen einer Anforderung für eine A/D-Wandlung mindestens eines Wandler-Anforderungsmittels (1), Auswählen desjenigen eine A/D-Wandlung anfordernden Wandler-Anforderungsmittels (1), dem augenblicklich eine höchste Priorität zugeordnet ist, und
c) A/D-Wandeln des von dem im Verfahrensschritt b) ausgewählten Wandler-Anforderungsmittel (1) angeforderten analogen Signals mit Hilfe des A/D-Wandlers (6).

2. Verfahren nach Anspruch 1,
**dadurch gekennzeichnet,**
**daß** jedem Wandler-Anforderungsmittel (1) eine unterschiedliche Priorität zugeordnet wird.

3. Verfahren nach Anspruch 1 oder 2,
**dadurch gekennzeichnet,**
**daß** im Verfahrensschritt b) fortwährend jedes Wandler-Anforderungsmittel (1) dahingehend überprüft wird, ob von dem jeweiligen Wandler-Anforderungsmittel (1) eine Anforderung für eine A/D-Wandlung durch den A/D-Wandler (6) vorliegt, und falls eine Anforderung eines Wandler-Anforderungsmittels (1) erkannt worden ist, ob dem entsprechenden Wandler-Anforderungsmittel (1) eine höhere Priorität als einem anderen Wandler-Anforderungsmittel (1) zugeordnet ist, von dem ebenfalls eine Anforderung für eine A/D-Wandlung erkannt worden ist.

4. Verfahren nach einem der Ansprüche 1 oder 3,
**dadurch gekennzeichnet,**
**daß** im Verfahrensschritt b) bei gleichzeitigem Vorliegen von Anforderungssignalen (16) unterschiedlicher Wandler-Anforderungsmittel (1) mit jeweils denselben Prioritäten dasjenige Wandler-Anforderungsmittel (1) ausgewählt wird, welches zeitlich zuerst überprüft worden ist.

5. Verfahren nach einem der vorhergehenden Ansprüche,
**dadurch gekennzeichnet,**
**daß** die den Wandler-Anforderungsmitteln (1) zugeordneten Prioritäten frei programmierbar und damit beliebig veränderbar sind.

6. Verfahren nach einem der vorhergehenden Ansprüche,
**dadurch gekennzeichnet,**
**daß** jedes Wandler-Anforderungsmittel (1) analoge Signale mehrerer Signalkanäle (2) anfordern kann, und daß im Verfahrensschritt b) nach Auswahl eines bestimmten Wandler-Anforderungsmittels (1) ein bestimmter Signalkanal (2) des bereits zuvor ausgewählten Wandler-Anforderungsmittels (1) ausgewählt und anschließend im Verfahrensschritt c) das dem ausgewählten Signalkanal (2) entsprechende analoge Signal von dem A/D-Wandler (6) gewandelt wird.

7. Verfahren nach Anspruch 6,
**dadurch gekennzeichnet,**
**daß** der Signalkanal (2) des bereits zuvor ausgewählten Wandler-Anforderungsmittels (1) gemäß einem vorbestimmten Prioritätsalgorithmus ausgewählt und das entsprechende analoge Signal dieses ausgewählten Signalkanals (2) dem A/D-Wandler (6) zugeführt wird.

8. Verfahren nach Anspruch 6 oder 7,
**dadurch gekennzeichnet,**
**daß** die Wandler-Anforderungsmittel (1) eine A/D-Wandlung durch den A/D-Wandler (6) anfordern, falls für mindestens einen Signalkanal (2) der dem jeweiligen Wandler-Anforderungsmittel (1) zugeordneten Signalkanäle (2) ein Anforderungssignal (16) für eine A/D-Wandlung vorliegt.

9. A/D-Wandleranordnung,
mit einem A/D-Wandler (6) zum A/D-Wandeln analoger Signale,
mit einer Vielzahl analoger Signalkanäle (2),
über die dem A/D-Wandler eine entsprechende Anzahl analoger Signale zuführbar ist,
mit einer Vielzahl von Wandler-Anforderungsmitteln (1) zum Anfordern mindestens eines der Signalkanäle (2),
die zu beliebigen Zeitpunkten Anforderungssignale (16) zur Anforderung einer A/D-Wandlung eines einem Signalkanal (2) zugeordneten analogen Signals bereitstellen,
wobei jedem Wandler-Anforderungsmittel (1) eine Priorität zugeordnet ist, und
mit Auswahlmitteln (3, 4),
die aus den eine A/D-Wandlung anfordernde Wandler-Anforderungsmitteln (1) diejenige auszuwählen, der augenblicklich eine höchste Priorität zugeordnet ist, und
die das von dem ausgewählten Wandler-Anforderungsmittel (1) angeforderte analoge Signal zur A/D-Wandlung dem A/D-Wandler (6) zuführen.

10. A/D-Wandleranordung nach Anspruch 9,
**dadurch gekennzeichnet,**
**daß** jedes Wandler-Anforderungsmittel (1) eine unterschiedliche Priorität aufweist.

11. A/D-Wandleranordnung nach Anspruch 9 oder 10,
**dadurch gekennzeichnet,**
**daß** die Auswahlmittel (3, 4) derart ausgestaltet sind, daß sie nacheinander für die einzelnen Wandler-Anforderungsmittel (1) überprüfen, ob von dem jeweiligen Wandler-Anforderungsmittel (1) ein Anforderungssignal (16) für eine A/D-Wandlung durch den A/D-Wandler (6) vorliegt, und falls ein Anforderungssignal (16) eines Wandler-Anforderungsmittels (1) erkannt worden ist, ob dem entsprechenden Wandler-Anforderungsmittel (1) eine höhere Priorität als einem anderen Wandler-Anforderungsmittel (1) zugeordnet ist, von dem ebenfalls ein Anforderungssignal (16) für eine A/D-Wandlung erkannt worden ist.

12. A/D-Wandleranordnung nach einem der Ansprüche 9 oder 11,
**dadurch gekennzeichnet,**
**daß** die Auswahlmittel (3, 4) derart ausgestaltet sind, daß sie bei gleichzeitigem Vorliegen von Anforderungssignalen (16) unterschiedlicher Wandler-Anforderungsmittel (1) mit jeweils denselben Prioritäten dasjenige Wandler-Anforderungsmittel (1) auswählen, welches zeitlich zuerst überprüft worden ist.

13. A/D-Wandleranordnung nach einem der Ansprüche 9 - 12,
**dadurch gekennzeichnet,**
**daß** die Auswahlmittel (3, 4) Speichermittel (13) zum Speichern der den jeweiligen Wandler-Anforderungsmitteln (1) zugeordneten Prioritäten umfassen.

14. A/D-Wandleranordnung nach Anspruch 13,
**dadurch gekennzeichnet,**
**daß** die Speichermittel (13) und/oder die Prioritäten der Wandler-Anforderungsmitteln (1) frei programmierbar sind.

15. A/D-Wandleranordnung nach einem der Ansprüche 9 - 14,
**dadurch gekennzeichnet,**
**daß** mindestens ein Wandler-Anforderungsmittel (1) ein Steuerregister (10) enthält, in dem bei Anforderung einer A/D-Wandlung eine dem Anforderungssignal (16) entsprechende Markierung gesetzt wird, und daß die Auswahlmittel (3, 4) das Vorhandensein von Anforderungssignalen (16) der Wandler-Anforderungsmittel (1) durch Überprüfen des Inhalts des Steuerregisters (10) der einzelnen Wandler-Anforderungsmittel (1) überwachen.

16. A/D-Wandleranordnung nach Anspruch 15,
**dadurch gekennzeichnet,**
**daß** jedes Wandler-Anforderungsmittel (1) analoge Signale mehrerer Signalkanäle (2) anfordern kann, und daß jedes Wandler-Anforderungsmittel (1) die Markierung in dem jeweiligen Steuerregister (10) setzt, falls für mindestens einen der Signalkanäle (2) eine Anforderung für eine A/D-Wandlung vorliegt.

17. A/D-Wandleranordnung nach Anspruch 16,
**dadurch gekennzeichnet,**
**daß** mindestens ein Wandler-Anforderungsmittel (1) ein weiteres Steuerregister (9) enthält, wobei in dem weiteren Steuerregister (9) jedem den entsprechenden Wandler-Anforderungmittel (1) zugeordneten Signalkanal (2) ein bestimmtes Bitfeld zugewiesen ist und bei Vorliegen einer Anforderung für eine A/D-Wandlung eines dieser Signalkanäle (2) eine Markierung in dem entsprechenden Bitfeld des weiteren Steuerregisters (9) gesetzt wird, wobei die Wandler-Anforderungsmittel (1) derart ausgestaltet sind, daß sie die Markierung in dem Steuerregister (10) setzen, falls in mindestens einem Bitfeld des weiteren Steuerregisters (9) eine eine Anforderung eines Signalkanals (2) anzeigende Markierung gesetzt ist.

18. A/D-Wandleranordung nach einem der Ansprüche 9 - 17,
**dadurch gekennzeichnet,**
**daß** weitere Auswahlmittel (5) vorgesehen sind, die derart ausgestaltet sind, daß sie nach der Auswahl des eine A/D-Wandlung anfordernden Wandler-Anforderungsmittels (1) einen bestimmten Signalkanal (2) auswählen und das dem ausgewählten Signalkanal (2) entsprechende analoge Signal dem A/D-Wandler (6) zuführen.

19. A/D-Wandleranordnung nach den Ansprüch den Ansprüchen 18 und 17,
**dadurch gekennzeichnet,**
**daß** die weiteren Auswahlmittel (5) derart ausgestaltet sind,
**daß** sie bei Vorhandensein von gleichzeitigen Anforderungen für eine A/D-Wandlung mehrerer Signalkanäle (2) des ausgewählten Wandler-Anforderungsmittels (1) denjenigen Signalkanal (2) auswählen, welcher dem in dem weiteren Steuerregister (9) des ausgewählten Wandler-Anforderungsmittels (1) enthaltenen höchstwertigen Bitfeld mit einer gesetzten Markierung entspricht.

20. A/D-Wandleranordnung nach Anspruch 19,
**dadurch gekennzeichnet,**
**daß** nach dem Start der A/D-Wandlung die dem ausgewählten Signalkanal (2) entsprechende Markierung in dem weiteren Steuerregister (9) des ausgewählten Wandler-Anforderungsmittels (1) gelöscht wird.

## Claims

1. Method for A/D conversion of analogue signals using an A/D converter (6) and using a multiplicity of converter request means (1), each having a priority assigned to them, having the following method steps:
a) a request signal (16) for requesting A/D conversion of an analogue signal is provided by at least one converter request means (1),
b) if a request for A/D conversion is made by at least one converter request means (1), that converter request means (1) requesting A/D conversion which presently has a highest priority assigned to it is selected, and
c) the analogue signal requested by the converter request means (1) selected in method step b) is subjected to A/D conversion using the A/D converter (6).

2. Method according to Claim 1,
**characterized**
**in that** each converter request means (1) has a different priority assigned to it.

3. Method according to Claim 1 or 2,
**characterized**
**in that**, in method step b), each converter request means (1) is continually checked to determine whether a request for A/D conversion by the A/D converter (6) is being made by the respective converter request means (1), and, if a request from a converter request means (1) has been detected, whether the appropriate converter request means (1) has a higher priority assigned to it than another converter request means (1) from which a request for A/D conversion has likewise been detected.

4. Method according to one of Claims 1 and 3,
**characterized**
**in that**, in method step b), if request signals (16) are simultaneously provided by different converter request means (1) having the same priorities in each case, that converter request means (1) which has been checked first in time is selected.

5. Method according to one of the preceding claims,
**characterized**
**in that** the priorities assigned to the converter request means (1) are freely programmable and can thus be changed at will.

6. Method according to one of the preceding claims,
**characterized**
**in that** each converter request means (1) can request analogue signals from a plurality of signal channels (2), and in that, in method step b), after a particular converter request means (1) has been selected, a particular signal channel (2) of the converter request means (1) already selected previously is selected, and then, in method step c), the analogue signal corresponding to the selected signal channel (2) is converted by the A/D converter (6).

7. Method according to Claim 6,
**characterized**
**in that** the signal channel (2) of the converter request means (1) already selected previously is selected on the basis of a predetermined priority algorithm, and the corresponding analogue signal for this selected signal channel (2) is supplied to the A/D converter (6).

8. Method according to Claim 6 or 7,
**characterized**
**in that** the converter request means (1) request A/D conversion by the A/D converter (6) if there is a request signal (16) for A/D conversion present for at least one signal channel (2) of the signal channels (2) associated with the respective converter request means (1).

9. A/D converter arrangement,
having an A/D converter (6) for A/D conversion of analogue signals,
having a multiplicity of analogue signal channels (2),
via which an appropriate number of analogue signals can be supplied to the A/D converter,
having a multiplicity of converter request means (1) for requesting at least one of the signal channels (2),
which provide request signals (16) for requesting A/D conversion of an analogue signal associated with a signal channel (2) at arbitrary instants,
each converter request means (1) having a priority assigned to it, and
having selection means (3,4)
which select from the converter request means (1) requesting A/D conversion those converter request means which presently have a highest priority assigned to them, and
which supply the analogue signal requested by the selected converter request means (1) to the A/D converter (6) for A/D conversion.

10. A/D converter arrangement according to Claim 9,
**characterized**
**in that** each converter request means (1) has a different priority.

11. A/D converter arrangement according to Claim 9 or 10,
**characterized**
**in that** the selection means (3,4) are designed such that they successively carry out a check for the individual converter request means (1) to determine whether the respective converter request means (1) is providing a request signal (16) for A/D conversion by the A/D converter (6), and, if a request signal (16) from a converter request means (1) has been detected, whether the appropriate converter request means (1) has a higher priority assigned to it than another converter request means (1) from which a request signal (16) for an A/D conversion has likewise been detected.

12. A/D converter arrangement according to one of Claims 9 and 11,
**characterized**
**in that** the selection means (3,4) are designed such that, if request signals (16) are simultaneously provided by different converter request means (1) having the same priorities in each case, they select that converter request means (1) which has been checked first in time.

13. A/D converter arrangement according to one of Claims 9 - 12,
**characterized**
**in that** the selection means (3,4) comprise storage means (13) for storing the priorities assigned to the respective converter request means (1).

14. A/D converter arrangement according to Claim 13, **characterized**
**in that** the storage means (13) and/or the priorities of the converter request means (1) are freely programmable.

15. A/D converter arrangement according to one of Claims 9 - 14,
**characterized**
**in that** at least one converter request means (1) contains a control register (10) in which a marker corresponding to the request signal (16) is set when an A/D conversion is requested, and in that the selection means (3,4) monitor the presence of request signals (16) from the converter request means (1) by checking the content of the control register (10) in the individual converter request means (1).

16. A/D converter arrangement according to Claim 15, **characterized**
**in that** each converter request means (1) can request analogue signals from a plurality of signal channels (2), and in that each converter request means (1) sets the marker in the respective control register (10) if there is a request for A/D conversion present for at least one of the signal channels (2).

17. A/D converter arrangement according to Claim 16, **characterized**
**in that** at least one converter request means (1) contains a further control register (9), with each signal channel (2) associated with the appropriate converter request means (1) being allocated a particular bit array in the further control register (9), and a marker being set in the appropriate bit array of the further control register (9) if there is a request present for A/D conversion of one of these signal channels (2), the converter request means (1) being designed such that they set the marker in the control register (10) if a marker indicating a request for a signal channel (2) is set in at least one bit array of the further control register (9).

18. A/D converter arrangement according to one of Claims 9 - 17,
**characterized**
**in that** further selection means (5) are provided which are designed such that, after the converter request means (1) requesting A/D conversion has been selected, they select a particular signal channel (2) and supply the analogue signal corresponding to the selected signal channel (2) to the A/D converter (6).

19. A/D converter arrangement according to Claims 17 and 18,
**characterized**
**in that** the further selection means (5) are designed such that, if simultaneous requests are present for A/D conversion of a plurality of signal channels (2) of the selected converter request means (1), they select that signal channel (2) which corresponds to the highest-value bit array which is contained in the further control register (9) of the selected converter request means (1) and has a marker set.

20. A/D converter arrangement according to Claim 19,
**characterized**
**in that**, after the start of the A/D conversion, that marker in the further control register (9) of the selected converter request means (1) which corresponds to the selected signal channel (2) is erased.

## Revendications

1. Procédé de conversion A/N de signaux analogiques à l'aide d'un convertisseur A/N (6) et à l'aide d'une pluralité de moyens de demande de conversion (1) auxquels est à chaque fois affectée une priorité, comprenant les étapes suivantes :
a) fourniture d'un signal de demande (16) destiné à demander la conversion A/N d'un signal analogique par au moins un moyen de demande de conversion (1),
b) en présence d'une demande de conversion A/N d'au moins un moyen de demande de conversion (1), sélection du moyen de demande de conversion (1) qui demande une conversion A/N auquel est momentanément affectée la priorité la plus élevée, et
c) conversion A/N à l'aide du convertisseur A/N (6) du signal analogique demandé par le moyen de demande de conversion (1) sélectionné dans l'étape b) du procédé.

2. Procédé selon la revendication 1, **caractérisé en ce qu'**une priorité différente est affectée à chaque moyen de demande de conversion (1).

3. Procédé selon la revendication 1 ou 2, **caractérisé en ce que** dans l'étape b) du procédé, chaque moyen de demande de conversion (1) est continuellement contrôlé pour vérifier s'il existe une demande de conversion A/N par le convertisseur A/N (6) provenant du moyen de demande de conversion (1) correspondant et, si une demande d'un moyen de demande de conversion (1) a été détectée, si le moyen de demande de conversion (1) correspondant possède une priorité supérieure à celle affectée à un autre moyen de demande de conversion (1) dont une demande de conversion A/N a également été détectée.

4. Procédé selon l'une des revendications 1 et 3, **caractérisé en ce que** dans l'étape b) du procédé, en cas de présence simultanée de signaux de demande (16) provenant de différents moyens de demande de conversion (1) ayant à chaque fois la même priorité, le moyen de demande de conversion (1) qui est sélectionné est celui qui a été contrôlé en premier dans le temps.

5. Procédé selon l'une des revendications précédentes, **caractérisé en ce que** les priorités affectées aux moyens de demande de conversion (1) peuvent être programmées librement et sont ainsi modifiables à volonté.

6. Procédé selon l'une des revendications précédentes, **caractérisé en ce que** chaque moyen de demande de conversion (1) peut demander les signaux analogiques de plusieurs canaux de signal (2) et que dans l'étape b) du procédé, après avoir sélectionné un moyen de demande de conversion (1) donné, un canal de signal (2) donné du moyen de demande de conversion (1) déjà sélectionné précédemment est sélectionné et ensuite, dans l'étape c) du procédé, le signal analogique correspondant au canal de signal (2) sélectionné est converti par le convertisseur A/N (6).

7. Procédé selon la revendication 6, **caractérisé en ce que** le canal de signal (2) du moyen de demande de conversion (1) déjà sélectionné précédemment est sélectionné conformément à un algorithme de définition de priorité prédéfini et le signal analogique correspondant de ce canal de signal (2) sélectionné est acheminé au convertisseur A/N (6).

8. Procédé selon la revendication 6 ou 7, **caractérisé en ce que** les moyens de demande de conversion (1) demandent une conversion A/N par le convertisseur A/N (6) s'il existe un signal de demande (16) de conversion A/N pour au moins un canal de signal (2) des canaux de signal (2) affectés au moyen de demande de conversion (1) correspondant.

9. Arrangement de convertisseur A/N, comprenant un convertisseur A/N (6) pour la conversion A/N de signaux analogiques, comprenant une pluralité de canaux de signal (2) par le biais desquels un nombre correspondant de signaux analogiques peut être acheminé au convertisseur A/N, comprenant une pluralité de moyens de demande de conversion (1) pour demander au moins l'un des canaux de signal (2) qui fournissent à des moments quelconques des signaux de demande (16) destinés à demander une conversion A/N d'un signal analogique affecté à un canal de signal (2), une priorité étant affectée à chaque moyen de demande de conversion (1), comprenant des moyens de sélection (3, 4) qui, parmi les moyens de demande de conversion (1) demandant une conversion A/N, sélectionnent celui auquel est momentanément affectée la priorité la plus élevée, et acheminent le signal analogique demandé par le moyen de demande de conversion (1) sélectionné à un convertisseur A/N (6) en vue de la conversion A/N.

10. Arrangement de convertisseur A/N selon la revendication 9, **caractérisé en ce que** chaque moyen de demande de conversion (1) présente une priorité différente.

11. Arrangement de convertisseur A/N selon la revendication 9 ou 10, **caractérisé en ce que** les moyens de sélection (3, 4) sont configurés de telle sorte qu'ils contrôlent pour chacun des moyens de demande de conversion (1) l'un après l'autre s'il existe pour le moyen de demande de conversion (1) correspondant un signal de demande (16) de conversion A/N par le convertisseur A/N (6) et, si un signal de demande (16) d'un moyen de demande de conversion (1) a été détecté, si le moyen de demande de conversion (1) correspondant possède une priorité supérieure à celle d'un autre moyen de demande de conversion (1) pour lequel un signal de demande (16) de conversion A/N a également été détecté.

12. Arrangement de convertisseur A/N selon l'une des revendications 9 et 11, **caractérisé en ce que** les moyens de sélection (3, 4) sont configurés de telle sorte qu'en cas de présence simultanée de signaux de demande (16) de différents moyens de demande de conversion (1) ayant à chaque fois la même priorité, ils sélectionnent le moyen de demande de conversion (1) qui a été contrôlé en premier dans le temps.

13. Arrangement de convertisseur A/N selon l'une des revendications 9 à 12, **caractérisé en ce que** les moyens de sélection (3, 4) comprennent des moyens de mémorisation (13) pour mémoriser les priorités affectées aux différents moyens de demande de conversion (1).

14. Arrangement de convertisseur A/N selon la revendication 13, **caractérisé en ce que** les moyens de mémorisation (13) et/ou les priorités des moyens de demande de conversion (1) sont programmables librement.

15. Arrangement de convertisseur A/N selon l'une des revendications 9 à 14, **caractérisé en ce qu'**au moins un moyen de demande de conversion (1) contient un registre de commande (10) dans lequel un marqueur correspondant au signal de demande (16) est activé en cas de demande de conversion A/N et que les moyens de sélection (3, 4) surveillent la présence de signaux de demande (16) des moyens de demande de conversion (1) en contrôlant le contenu du registre de commande (10) de chacun des moyens de demande de conversion (1).

16. Arrangement de convertisseur A/N selon la revendication 15, **caractérisé en ce que** chaque moyen de demande de conversion (1) peut demander les signaux analogiques de plusieurs canaux de signal (2) et que chaque moyen de demande de conversion (1) active le marqueur dans le registre de commande (10) correspondant s'il existe une demande de conversion A/N pour au moins l'un des canaux de signal (2).

17. Arrangement de convertisseur A/N selon la revendication 16, **caractérisé en ce qu'**au moins un moyen de demande de conversion (1) contient un registre de commande supplémentaire (9), un champ binaire donné étant associé dans le registre de commande supplémentaire (9) à chaque canal de signal (2) affecté au moyen de demande de conversion (1) correspondant et, en présence d'une demande de conversion A/N d'un de ces canaux de signal (2), un marqueur étant activé dans le champ binaire correspondant du registre de commande supplémentaire (9), les moyens de demande de conversion (1) étant configurés de telle sorte qu'ils activent le marqueur dans le registre de commande (10) si un marqueur indiquant une demande d'un canal de signal (2) est activé dans au moins l'un des champs binaires du registre de commande supplémentaire (9).

18. Arrangement de convertisseur A/N selon l'une des revendications 9 à 17, **caractérisé en ce que** des moyens de sélection supplémentaires (5) sont prévus, lesquels sont configurés de telle sorte qu'ils sélectionnent un canal de signal (2) donné après la sélection d'un moyen de demande de conversion (1) demandant une conversion A/N et acheminent au convertisseur A/N (6) le signal analogique correspondant au canal de signal (2) sélectionné.

19. Arrangement de convertisseur A/N selon l'une des revendications 18 et 17, **caractérisé en ce que** les moyens de sélection supplémentaires (5) sont configurés de telle sorte qu'en cas de présence simultanée de demandes de conversion A/N de plusieurs canaux de signal (2), ils sélectionnent le canal de signal (2) du moyen de demande de conversion (1) sélectionné qui correspond au champ binaire de poids fort ayant un marqueur activé contenu dans le registre de commande supplémentaire (9) du moyen de demande de conversion (1) sélectionné.

20. Arrangement de convertisseur A/N selon la revendication 19, **caractérisé en ce qu'**après le début de la conversion A/N, le marqueur correspondant au canal de signal (2) sélectionné est supprimé dans le registre de commande supplémentaire (9) du moyen de demande de conversion (1) sélectionné.
